(19)

Europäisches
Patentamt
European
Patent Office
Office européen
des brevets

(11)     **EP 3 146 327 B1**

(12)                        **EUROPEAN PATENT SPECIFICATION**

(45) Date of publication and mention
of the grant of the patent:
**06.11.2019  Bulletin 2019/45**

(21) Application number: **14780417.3**

(22) Date of filing: **30.09.2014**

(51) Int Cl.:
*G01N 31/10* [(2006.01)]     *G01N 25/48* [(2006.01)]

(86) International application number:
**PCT/EP2014/002666**

(87) International publication number:
**WO 2015/176733 (26.11.2015 Gazette 2015/47)**

(54) **METHOD AND DEVICE FOR DETECTION AND MEASURING THE DENSITY OF NEUTRAL ATOMS OF HYDROGEN, OXYGEN OR NITROGEN**

VERFAHREN UND VORRICHTUNG ZUR DETEKTION UND MESSUNG DER DICHTE NEUTRALER ATOME VON WASSERSTOFF, SAUERSTOFF ODER STICKSTOFF

PROCÉDÉ ET DISPOSITIF DE DÉTECTION ET DE MESURE DE DENSITÉ D'ATOMES NEUTRES D'HYDROGÈNE, D'OXYGÈNE OU D'AZOTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.05.2014  SI 201400190**

(43) Date of publication of application:
**29.03.2017  Bulletin 2017/13**

(73) Proprietor: **INSTITUT JOZEF STEFAN
1000 Ljubljana (SI)**

(72) Inventors:
 • **PRIMC, Gregor**
  **1381 Rakek (SI)**
 • **MOZETIC, Miran**
  **1000 Ljubljana (SI)**
 • **CVELBAR, Uros**
  **1000 Ljubljana (SI)**
 • **VESEL, Alenka**
  **8210 Trebnje (SI)**

(74) Representative: **Jersan, Tatjana
ITEM d.o.o.
Patent and Trademark Agency
Resljeva cesta 16
1000 Ljubljana (SI)**

(56) References cited:
 • MIRAN MOZETIC: "Extremely non-equilibrium oxygen plasma for direct synthesis of metal oxide nanowires on metallic substrates", JOURNAL OF PHYSICS D: APPLIED PHYSICS, INSTITUTE OF PHYSICS PUBLISHING LTD, GB, vol. 44, no. 17, 14 April 2011 (2011-04-14), page 174028, XP020189719, ISSN: 0022-3727, DOI: 10.1088/0022-3727/44/17/174028
 • BABIC D ET AL: "Fiber optic catalytic probe for weakly ionized oxygen plasma characterization", REVIEW OF SCIENTIFIC INSTRUMENTS, AIP, MELVILLE, NY, US, vol. 72, no. 11, 1 November 2001 (2001-11-01), pages 4110-4114, XP012038884, ISSN: 0034-6748, DOI: 10.1063/1.1409567
 • MOZETIC MIRAN ET AL: "Comparison of NO titration and fiber optics catalytic probes for determination of neutral oxygen atom concentration in plasmas and postglows", JOURNAL OF VACUUM SCIENCE AND TECHNOLOGY: PART A, AVS/AIP, MELVILLE, NY, US, vol. 21, no. 2, 1 March 2003 (2003-03-01), pages 369-374, XP012006304, ISSN: 0734-2101, DOI: 10.1116/1.1539082

**Description**

FIELD OF THE INVENTION

The present invention relates to a method of detection of neutral hydrogen, oxygen or nitrogen atoms in non-equilibrium gaseous media, as well as determination of the density of said neutral atoms in said gaseous media. The present invention also relates to a device for measuring the density of neutral hydrogen, oxygen or nitrogen atoms in non-equilibrium gaseous media.

BACKGROUND OF THE INVENTION

Advanced techniques for tailoring surface properties of solid as well as liquid materials often employ non-equilibrium gaseous media. A non-equilibrium medium is defined as the state of gas which is not in thermal equilibrium. A gaseous medium is in thermal equilibrium providing the concentration of atoms follow the Boltzmann law which is for the case of hydrogen, oxygen and nitrogen gas defined as:

$$[H]/2[H_2] = exp(-W_D/k\,T),$$
$$[O]/2[O_2] = exp(-W_D/k\,T),$$
$$[N]/2[N_2] = exp(-Wo/k\,T),\ respectively.$$

The term [H] represents the density of hydrogen atoms in a gaseous medium, $[H_2]$ the density of hydrogen molecules in a gaseous medium, [O] represents the density of oxygen atoms in a gaseous medium, $[O_2]$ the density of oxygen molecules in a gaseous medium, [N] represents the density of nitrogen atoms in a gaseous medium, $[N_2]$ the density of nitrogen molecules in a gaseous medium, exp stands for exponential function, k is the Boltzmann constant ($1.38 \times 10^{-23}$ J/K) and T is the gas temperature. The gas temperature is defined from the equation of state:

$$p\,V = n\,R\,T,$$

where p is the absolute pressure of the gas, V is the volume of the gas, n is the amount of substance of the gas (measured in moles), T is the absolute temperature of the gas and R is the ideal, or universal, gas constant.
The terms $[H]/2[H_2]$, $[O]/2[O_2]$ and $[N]/2[N_2]$ will be called dissociation fractions. Any deviation from Boltzmann law for more than an order of magnitude is defined as non-equilibrium gaseous medium. In most practical applications the deviation is many orders of magnitude. In fact, the dissociation fraction in commercially applied non-equilibrium gaseous media could be as high as 0.01 if not more, although the gas temperature could be as low as 300 K.
Non-equilibrium gaseous media are suitable for tailoring surface properties of solid and liquid materials.

Unlike parent molecules, neutral atoms are chemically reactive already at low temperature and allow for incorporation of said gaseous atoms into the surface film of solid or liquid materials where they often interact chemically with neighboring atoms forming specific functional groups. The modified surface film may or may not be stable. In the latter case, said atoms form small molecules which leave the surface thus causing chemical etching of the material. The examples of employing hydrogen atoms include de-oxidation of organic and inorganic surfaces. The treated materials are often oxygen free which is beneficial for the technology of reduction of metal oxides and transformation of oxygen-containing polymers to oxygen-free polymers. The small molecules formed on the surface and leaving the surface are often water molecules ($H_2O$). In case oxygen non-equilibrium medium is used for treatment of solid or liquid materials, the effect is reversed opposed to what is observed for hydrogen. Materials exposed to oxygen atoms are functionalized with oxygen-containing functional groups. Polymers exposed to non-equilibrium oxygen medium are functionalized with polar functional groups which in turn lead to hydrophilic properties of originally hydrophobic materials. Many metals exposed to non-equilibrium oxygen medium are oxidized so metal oxide is formed on the surface. The oxide may be formed in a form of a thin film, but more common is formation of quasi one-dimensional nanostructures such as nano-wires, nano-spikes, nanoneedles and alike. Some materials form zero dimensional nano-dots upon exposure to non-equilibrium oxygen medium. Non-equilibrium nitrogen gaseous medium is often abound with nitrogen atoms which cause formation of nitrogenrich functional groups on polymer materials. In turn, this may lead to bacteriostatic properties of materials treated that way or the formed functional groups represent anchors for specific bonding of various molecules thus modifying biocompatibility of treated materials. Nitrogen atoms may also cause nitrification of inorganic materials. In all above mentioned technologies the reactants causing modification of surface properties are neutral atoms, either H, O or N. Since the effects caused by exposure of solid or liquid materials to non-equilibrium gaseous media often depend on the flux and fluence of said neutral atoms onto the surface of said materials, it pays to measure their density in the non-equilibrium gaseous media.
The density of atoms in non-equilibrium gaseous media has been traditionally measured by optical emission and absorption spectroscopies as well as chemical titration and catalytic probes. All these methods have drawbacks so there is a need for innovative techniques of high reliability. JP2012093364 provides a particle density measurement probe which measures atom or molecule density in a plasma atmosphere through spectrophotometry. The particle density measurement probe is a columnar light guide body provided in the plasma atmosphere, and has a reflection plate which reflects light propagated in the light guide body at a tip part thereof, and a plasma introduction part in front of the reflection body. The plasma introduction part is formed in such a way that a part where a partial wall surface is missing in a section perpendicular to the length direction of the light guide body is formed to a predetermined length in the length direction and allowing light passing through the part and atoms or molecules in the plasma atmosphere to come into contact with each other. A similar device is disclosed in JP2008241283.

CN103165378 discloses a dose detection method used for plasma immersion injection of ionized atoms and belongs to the semiconductor manufacturing technical field. The dose detection method used for the plasma immersion injection comprises the following steps: confirming injected ion species, charge number of each ion, proportion of number of each ion in number of total ion and total current density of all injected ions, and obtaining injection dose of the ions by integral operation.

CN101949852 teaches establishing a calibrating model by using the intensity of an atomic characteristic spectral line after spectral standardization as a vertical coordinate and using the concentration of an element corresponding to the atomic characteristic spectral line as a horizontal coordinate.

WO2009154037 provides a method for measuring nitrogen atoms whereby nitrogen atom density is measured in real time. The method comprises: a procedure of mixing a portion in a definite amount of a nitrogen atom-containing gas generated from a nitrogen atom source with a definite amount of nitrogen monoxide gas with a known concentration in the downstream of the nitrogen atom source. Basically it is a chemical titration method.

JP2008032606 teaches a method of LIPS quantitative measurement based on one or more spectrum peak values in plasma spectrum used as calibration data. The ratio of peak value of the spectral line of 486 nm and 656 nm is calculated using the hydrogen as an atom drawing attention, and is used for determining the plasma state, so this method is basically a variety of optical spectroscopy.

Finally, SI20493 teaches application of an optical catalytic probe for concentration measurement of atomic oxygen, nitrogen and hydrogen in a plasma or gas. The measurement of concentration is based on exothermic catalytic recombination of atoms on the catalytic surface leading to the rise of catalyst temperature. The most important difference between the optical catalytic probe and standard catalytic probes is in the way of catalyst temperature measurement. In optical catalytic probe the catalyst temperature is determined by measuring the thermal radiation emitted by the catalst. A similar optical catalytic probe is mentioned in M. Mozetic: "Extremely non-equilibrium oxygen plasma for direct synthesis of metal oxide nanowires on metallic substrates", JOURNAL OF PHYSICS D: APPLIED PHYSICS (2011), vol. 44, no. 17, p. 174028.

Despite the various methods known for measuring the density of hydrogen, oxygen and nitrogen atoms, there remains a need for improved methods of increasing reliability and reproducibility of results, which overcome common disadvantages of the presently known methods. For example, the above described titration methods employ hazardous gases like nitric oxide, or deteriorate the properties of medium by depletion. Methods using optical absorption or emission are time consuming and employ expensive equipment, while catalytic probes often fail due to poor activation of the catalytic material at low temperature and are extremely sensitive to impurities commonly found in non-equilibrium gaseous media for tailoring surface properties of solid and liquid materials. The probe taught by Mozetic and in SI20493 fails to measure the atom density in moderately non-equilibrium gaseous media since the low operating temperature prevents detection of atoms in media where the dissociation fraction is below about 1 %. Furthermore, the probe taught by Mozetic and SI20493 fails to measure the atom density during treatment of porous polymer materials since the reaction products stick to catalyst surface and prevent extensive recombination of atoms.

SUMMARY OF THE INVENTION

It is an object of the present invention to provide a method and device for the detection and measurements of neutral hydrogen, oxygen or nitrogen atoms in non-equilibrium gaseous media, which allow measurements with improved sensitivity even in case of minor quantities of the above neutral atoms in the gaseous media.

The object is achieved with the method and device according to claims 1 and 7. Advantageous embodiments of the method and the device are subject matter of the dependent claims or are described in the subsequent portions of the description.

The method and device of the invention represent a suitable tool for detection of said neutral atoms as well as determination of fluxes and fluences since they allow for rather precise determination of the density of said atoms in non-equilibrium gaseous media.

In the proposed method a catalytic material is used, which is preferably provided in form of a catalytic tip but may also be provided in another form. The catalytic material is a material of optimal properties for heterogeneous surface recombination of said atoms which have to be detected. The catalytic material or catalytic tip is inserted in said gaseous medium and heated with a laser as remote source of radiation to a preset temperature which is at least 100 K above the ambient temperature. The term "ambient temperature" according to the present invention, shall be understood to define the kinetic temperature of gaseous molecules and atoms in thermally non-equilibrium gaseous medium calculated from ideal gas law, i.e. $pV = nRT$. Here, T is the temperature. The laser radiation is guided with an optical fiber to the catalytic material or catalytic tip. The temperature of the catalytic material is measured with an appropriate detector. Based on this measurement the power of the remote source of radiation, i.e. the laser source, is controlled in such a manner that the temperature of said catalytic material remains at the preset temperature during the measurement of neutral hydrogen, oxygen or nitrogen atoms in said non-equilibrium gaseous medium. The temperature of the catalytic material thus remains at the preset temperature independent from the density of neutral hydrogen, oxygen or nitrogen atoms in the vicinity of said catalytic material. The power of the remote source employed to keep the preset temperature of the catalytic material is determined via the electronic control of the remote source or by measurement and transformed to the density of the neutral atoms in said non-equilibrium gaseous medium. This transformation may be made e.g. based on an appropriate mathematical function or based on preceding calibration measurements. The measured density of the corresponding neutral atoms is then stored and/or displayed. The measurement is thus based on the heating power of the remote source of radiation required to maintain the preset temperature. This heating power depends on the heating of the catalytic material by the catalytic reaction which is different for different amounts of neutral atoms, i.e. for different densities of these atoms in the gaseous medium.

The corresponding device for detection and measurement of the density of neutral hydrogen, oxygen or nitrogen atoms in non-equilibrium gaseous media thus comprises a catalytic material, e.g. in form of a catalytic tip, a laser as remote source of radiation for heating of the catalytic material or tip, an electronic system for adjustment of the power of the remote source of radiation, an optical fiber for transfer of the laser radiation from the source to the catalytic material, a detector and detector electronic system for measuring the temperature of the catalytic material, and a processing unit that controls both electronic systems according to the above method and allows for real-time determination of the density of said atoms in non-equilibrium media at the spot where the catalytic material or tip is placed.

Against the prior art the present invention addresses the need for further and improved methods of increasing sensitivity to detect minor quantities of neutral hydrogen, oxygen or nitrogen atoms likely to be found when non-equilibrium gaseous media are employed for tailoring surface properties of materials likely to represent a sink for said atoms. In particular, the present method is not sensitive to poor activation of the sensor, i.e. the catalytic material of the proposed device, since the sensor operates essentially at elevated temperature where surface activation is an instant process. The present method does not suffer from temperature dependent probability for heterogeneous surface recombination of atoms since the innovative method assures for high temperature of the catalyst independent from the power dissipated by heterogeneous recombination of atoms on the catalyst surface. Last but not least, the present method is almost immune to adsorption of gaseous impurities very likely to be found in non-equilibrium gaseous media during processing of solid and liquid materials since the high operating temperature of present method effectively prevents such adsorption and thus allows for optimal sensing efficiency even in the cases in which polymer or any other materials containing hydrogenated carbon are treated.

In a preferred embodiment, said method allows for measuring the density of neutral hydrogen, oxygen or nitrogen atoms in non-equilibrium gaseous media without significant distortion of the measured values typical for media undisturbed by the presence of the device.

In a further preferred embodiment, the detection limit of said device is set at dissociation fractions below $10^{-5}$. The range of dissociation fraction values that could be measured by the method of the invention is between $10^{-5}$ and 1.

A particularly preferred embodiment employs an infrared laser in order to heat the catalytic material of the probe to a temperature which allows for rapid activation of the catalyst surface in a time span of less than a second and which prevents adsorption of radicals likely to be created upon interaction between non-equilibrium gaseous media and materials containing hydrogenated carbon. In the preferred embodiment the temperature of the catalyst surface heated with said infrared laser is above 600 K.

The temperature of the catalyst surface is kept constant during measurements of the density of neutral hydrogen, oxygen or nitrogen atoms in non-equilibrium gaseous media. The term constant temperature refers to deviation from the pre-set temperature of the catalyst surface being below 10 %. In a further preferred embodiment the said constant temperature does not deviate from the pre-set value for more than 2 %.

The constant temperature of the catalyst surface is achieved independently from the flux of neutral hydrogen, oxygen or nitrogen atoms in non-equilibrium gaseous media by automatic adjustment of the output power of said infrared laser. In the preferred embodiment the laser power is increased in a time span of less than a second if the power supplied to the catalyst surface by heterogeneous surface recombination of neutral hydrogen, oxygen or nitrogen atoms in non-equilibrium gaseous media is decreased. In contrary, the laser power is decreased in a time span of less than a second if the power supplied to the catalyst surface by heterogeneous surface recombination of neutral hydrogen, oxygen or nitrogen atoms in non-equilibrium gaseous media is increased.

In preferred embodiments, the temperature of the catalyst surface is measured in intervals of less than 10 milliseconds and the value is processed electronically and used for driving the laser power. If the deviation from the set value is more than 2 K the laser power will change automatically. In the case the temperature of the catalyst surface decreased for more than 2 K from previously detected value, the laser power would increase until the original (constant) temperature of the catalyst surface is re-established. If the measured temperature increased for more than 2 K from previously detected value, the laser power would decrease in order to re-establish the previous value. Such dynamical adjustment of the laser power employed for heating the catalyst surface assures for keeping the catalyst surface temperature constant, i.e. within the limits of $\pm 2$ K. A substantially constant temperature is essential since it prevents adsorption of radicals likely to be found in non-equilibrium gaseous media suitable for tailoring surface properties of various materials, especially those containing hydrogenated carbon.

Preferably, the temperature of the catalyst surface is pre-set to a value of 1100 K. Such a temperature of the catalyst surface is beneficial since it allows for optimal catalytic activity of the catalyst surface; the temperature of 1100 K allows for saturation of the surface with chemisorbed neutral hydrogen, oxygen or nitrogen atoms from non-equilibrium gaseous media in a time span of a millisecond; the temperature is sustained rather easily by heating with an appropriate diode-type infrared laser. The temperature is detected to an appreciable accuracy using a standard silicon and/or indium-gallium-arsenic detector of infrared radiation. This also applies to other embodiments of the invention. The chosen catalytic materials exhibit long-term stability for catalysis of neutral hydrogen, oxygen or nitrogen atoms to parent molecules.

In an embodiment of the method of the invention, the catalyst material is immersed into non-equilibrium gaseous medium rich in neutral hydrogen, oxygen or nitrogen atoms and heated to an appropriate temperature (could be any temperature between 500 K and 1500 K, but preferably to 1100 K) by infrared laser. If detected temperature of the catalyst surface is over preferred value (in the preferred embodiment 1100 K) the laser power is decreased until the preferred value is obtained. If detected temperature of the catalyst surface is below preferred value (in the preferred embodiment 1100 K) the laser power is increased until the preferred value is obtained. Once the preferred value of the catalyst surface is achieved by adjusting the power of the infrared laser the power needed to sustain the preferred catalyst temperature is processed and the device displays the value of the density of neutral hydrogen, oxygen or nitrogen atoms in the vicinity of the catalyst surface. In the preferred embodiment the processing takes less than 20 milliseconds. Moving the catalyst in the chamber filled with non-equilibrium gaseous medium rich in neutral hydrogen, oxygen or nitrogen atoms then allows for detection of density of said atoms at any position in the chamber and thus detection of possible gradients likely to occur in front of materials being processed with neutral hydrogen, oxygen or nitrogen atoms.

In a preferred embodiment the measurement of the catalyst temperature is repeated every 20 milliseconds and adjusted over this time span so the method allows for detection of changes in the density of neutral hydrogen, oxygen or nitrogen atoms in non-equilibrium gaseous medium, that occur in a typical time span of milliseconds. Thus, the method of the invention allows for real-time measurements of the density of neutral hydrogen, oxygen or nitrogen atoms.

The present invention also relates to a device suitable for measurements of neutral hydrogen, oxygen or nitrogen atoms in non-equilibrium gaseous media. In a preferred embodiment, the device consists of the catalyst, the detector or sensor of catalyst temperature, a detector electronic system for measuring the catalyst temperature, an infrared laser, a laser electronic system that allows for driving the infrared laser in such a way to assure for almost constant catalyst temperature, and a processing unit that controls the laser and detector electronic systems, transforms the measured value of temperature to density of hydrogen, oxygen or nitrogen atoms in the vicinity of the catalyst, and stores measured and transformed values.

BRIEF DESCRIPTION OF THE DRAWINGS

Figure 1    shows an arrangement useful for conducting the method of the invention.

Figure 2    shows experimental results of the catalyst surface temperature versus applied power for driving the infrared laser.

Figure 3    shows experimental dependence of the O atom density versus the applied power for driving the infrared laser.

Figure 4    shows the density of neutral oxygen atoms along a processing chamber indicating loss of O atoms due to association on the surface of the processing chamber.

Figure 5    shows axial dependence of the O atom density in a processing chamber during synthesis of an oxide thin film on the surface of copper material.

DETAILED DESCRIPTION OF THE INVENTION

The expression "infrared laser", according to the present invention, shall be understood to define a device suitable for emitting coherent electromagnetic radiation in the wavelength typical for the infrared region, i.e. from 700 nm to 1 mm. Such radiation is absorbed well on the surface of catalyst materials.

The tendency of a material to adsorb radiation originating from the infrared laser allows for rapid heating of the catalyst material to a desired temperature, preferably 1100 K.

The expressions "catalyst" and "catalytic material", according to the present invention, shall be understood to define any material which exhibits tendency to chemisorb neutral hydrogen, oxygen or nitrogen atoms which, upon impingement of neutral hydrogen, oxygen or nitrogen atoms from the gas phase, form parent molecules and the energy released upon formation of the parent molecule causes heating of the material. The list of catalysts suitable to facilitate such surface reactions includes but is not limited to the following materials: Au, Pt, Ag, Fe, Co, Cr, Cu and Ni.

Hence, in accordance with one aspect of the invention, the infrared laser is employed to heat the catalyst material by at least 100 K, preferably at least 300 K, most preferably at least 600 K. above the ambient temperature. The infrared laser may emit radiation into a wide solid angle. In order to focus the radiation emitted from the infrared laser a lens or a system of lenses is mounted in front of the infrared laser so that the emitted infrared radiation is focused onto the catalyst material.

In another preferred embodiment of the invention, the radiation emitted from the infrared laser is focused into an optical fiber transparent for said infrared radiation so the infrared radiation emitted from the infrared laser is transferred to the catalyst through said optical fiber to the said catalyst without much attenuation.

In the preferred embodiment, the temperature of the catalyst is measured in discrete manner, i.e. every 20 milliseconds. The detection of the catalyst temperature is realized using any method. In the preferred embodiment the temperature of the catalyst is determined from measurements of the gray body radiation emitted from the catalyst material since it has been heated using the infrared laser. In further preferred embodiment the gray-body radiation enters the optical fiber employed for transfer of the infrared radiation from the infrared laser to the catalyst.

In a preferred embodiment the catalyst is heated by the infrared radiation from the infrared laser over a time span between 0.1 second and 10 seconds, preferably 1 second in order to obtain the selected temperature of the catalyst after turning on the infrared laser. Once the selected temperature is achieved with heating of the catalyst by infrared radiation, the laser power is adjusted in such a way to allow for almost constant temperature of the catalyst. The temperature of the catalyst is measured by detectors of gray body radiation. Any detector of the gray body radiation could be used. In the preferred embodiment a double detector is used. The sensing of the gray body radiation from the catalyst is in this case realized with silicon and indium-gallium-arsenic detectors (Si and InGaAs) and a detector electronic system. A laser electronic system is employed for triggering the infrared laser. Both laser and detector electronic systems are controlled using a processing unit. If the temperature, measured by the detector and the detector electronic system, does not differ from the preferred value (often 1100 K) for more than $\pm 2$ K, the laser remains operating at essentially the same power; if the measured temperature is higher than the preferred value (often 1100 K) for more than 2 K the processing unit causes a decrease of the power supplied to the infrared laser through the laser electronic system; if the measured temperature is lower than the preferred value (often 1100 K) for more than 2 K the processing unit causes increase of the power supplied to the infrared laser through the laser electronic system. Such a dynamic control of the power supplied to the infrared laser allows for keeping the catalyst temperature constant over the entire period of detection and measurements of the density of neutral hydrogen, oxygen or nitrogen atoms in non-equilibrium gaseous media.

The power supplied to the infrared laser needed for sustenance of almost constant catalyst temperature is stored and transformed to density of hydrogen, oxygen or nitrogen atoms. The expression "almost constant" refers to the value deviating from the set value for less than 2 K. The value of the density of neutral hydrogen, oxygen or nitrogen atoms in non-equilibrium gaseous media obtained according to the methods of invention are presented on a display and transferred to a computer for possible further analyses. In a preferred embodiment the value is digitalized and thus suitable for reading with a computer using any interface. In a further preferred embodiment the USB, RS-232 or Ethernet transfer protocols are employed.

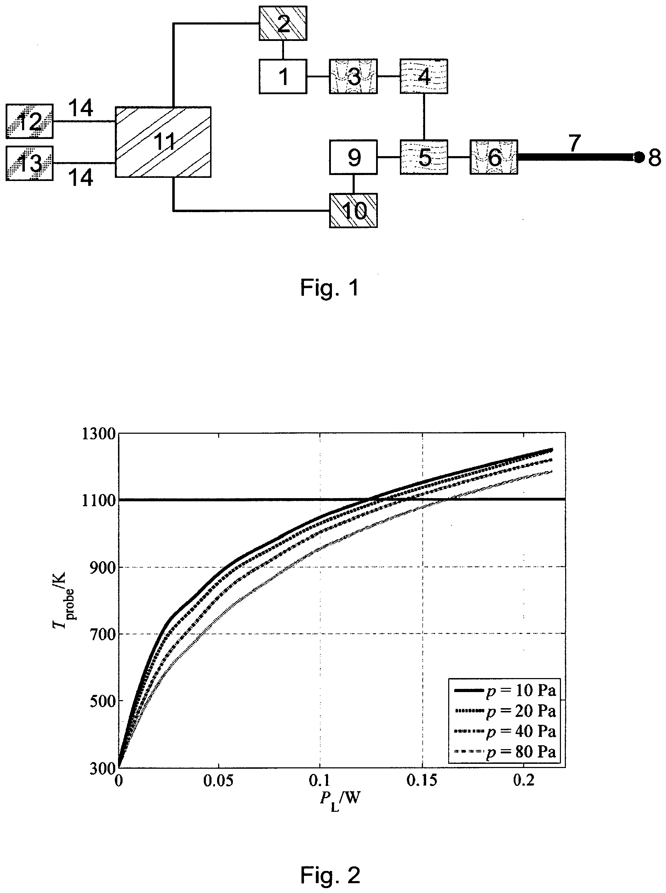

Schematic of an exemplary setup suitable for detection and measurements of neutral hydrogen, oxygen or nitrogen atoms in non-equilibrium gaseous media is shown in Figure 1. In this figure an infrared laser 1 which is controlled with the laser electronic system 2 emits infrared radiation through collimator with a band-pass filter 3 onto a mirror 4. The infrared radiation is reflected at the filter with a mirror 5 and collimated with a second collimator 6. Then infrared radiation enters an optical fiber 7. The infrared radiation from the infrared laser 1 is guided through the optical fiber 7 to the catalyst material 8. The catalyst material is heated to a preferred temperature upon absorption of the infrared radiation emitted from the infrared laser 1. The catalyst 8 temperature is at least 100 K above the ambient temperature, preferably at least 300 K, most preferably about 800 K above the ambient temperature. The catalyst material 8 heated to the preferred temperature emits grey body radiation in the entire solid angle. A part of emitted gray body radiation enters the optical fiber 7 and is thus transferred to a grey body radiation detector 9 through the collimator 6 and the filter with a mirror 5. The gray body radiation detector 9 which is controlled with the detector electronic system 10 measures the gray body radiation emitted from the catalyst 8. The processing unit 11 controls the laser electronic system 2 and the detector electronic system 10 and transforms the detected gray body radiation into instant temperature of the catalyst 8 and stores measured and transformed values. The processing unit 11 compares the instant catalyst temperature with the set temperature which is at least 100 K, preferably at least 300 K, most preferably about 800 K above the ambient temperature. The processing unit 11 reads the instant catalyst 8 temperature and adjusts the infrared laser 1 through the laser electronic system 2 by changing the power supplied to the infrared laser 1. In the case the instant temperature of catalyst 8 stored in the processing unit 11 does not differ from the preferred value (often 1100 K) for more than ±2 K the laser remains operating at essentially the same power; if the measured temperature is higher than the preferred value (often 1100 K) for more than 2 K the processing unit 11 causes a decrease of the power supplied to the infrared laser through the laser electronic system 2; if the measured temperature is lower than the preferred value (often 1100 K) for more than 2 K the processing unit 11 causes an increase of the power supplied to the infrared laser through the laser electronic system 2.

In the preferred embodiment the measurement of the catalyst temperature is repeated every 20 millisecond and adjusted according to the methods of invention, i.e. by changing the power supplied to the infrared laser 1 through the laser electronic system 2. Such a procedure allows for keeping the temperature of the catalyst 8 almost constant.

The value of the infrared laser 1 power needed to sustain the almost constant temperature of the catalyst 8 is measured by the laser electronic system 2 and transformed to density of neutral hydrogen, oxygen or nitrogen atoms by the processing unit 11 using an appropriate mathematical function. The value of the said density is instantly transmitted using any interface 14 and displayed on an appropriate display 12. The value is digitalized and transmitted to a computer 13 using any interface 14.

Figure 2 shows experimental results of the catalyst surface temperature versus applied power for driving the infrared laser 1 with the laser electronic system 2. The catalyst 8 is mounted in a vacuum chamber and heated with an infrared laser 1. The temperature of the catalyst 8 increases monotonously with increasing power of the infrared laser 1. Four curves are presented in Figure 2: one obtained at the pressure of 10 Pa, the other one at 20 Pa, the third at 40 Pa, and the fourth at 80 Pa. The power of the infrared laser 1 employed to sustain the preferred temperature of 1100 K for the set values of pressure is 0.124 W, 0.132 W, 0.142 W and 0.162 W, respectively.

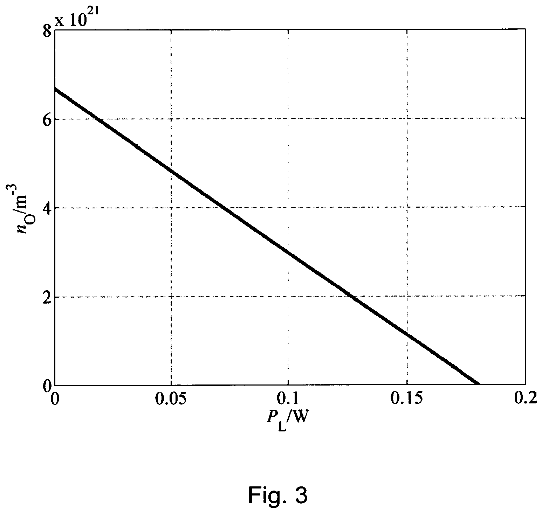

Figure 3 shows experimental dependence of the oxygen atom density versus the power applied for powering the infrared laser 1. The catalyst 7 was immersed into non-equilibrium oxygen gaseous medium obtained by passing equilibrium oxygen gas through a radiofrequency gaseous discharge. The temperature of the catalyst 7 was set to 1100 K.

EXAMPLE 1 - DETERMINATION OF THE NEUTRAL OXYGEN ATOM DENSITY

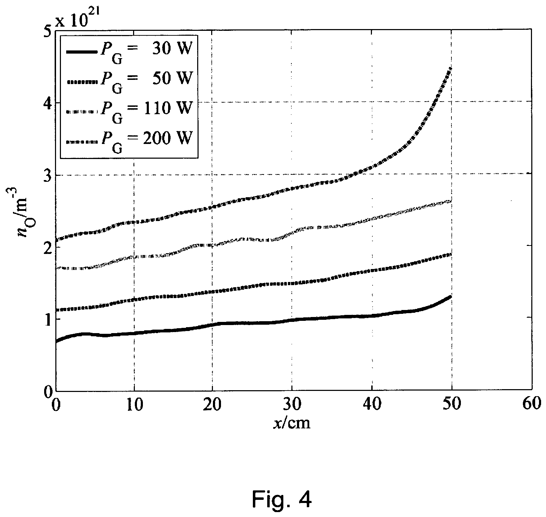

Figure 4 shows the density of neutral oxygen atoms along a processing chamber indicating loss of O atoms due to association on the surface of the processing chamber. The O-atom density decreases along the chamber and the density depends also on the discharge power.

EXAMPLE 2 - NEUTRAL OXYGEN ATOM DENSITY DURING SYNTHESIS OF AN OXIDE THIN FILM

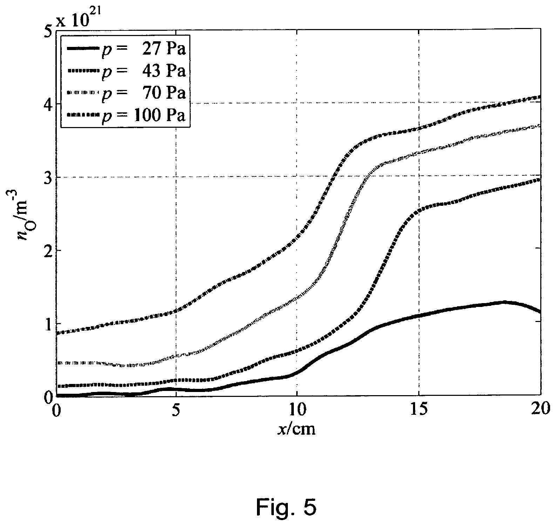

Figure 5 shows axial dependence of the O atom density in a processing chamber during synthesis of an oxide thin film on the surface of copper material. Strong gradients, which depend also on the gas pressure, are observed due to extensive loss of atoms on the surface of copper material.

**Claims**

1. Method for detection and measurements of neutral hydrogen, oxygen or nitrogen atoms in a non-equilibrium gaseous medium, said method at least comprising:

   - Inserting at least one catalytic material (8) into said non-equilibrium gaseous medium;
   - Heating said catalytic material (8) to a preset temperature which is at least 100 K above the ambient temperature using a remote source of radiation, said remote source of radiation being a laser the radiation of which is guided with an optical fiber (7) to the catalytic material (8);
   - Detecting said catalytic material temperature;
   - Controlling the power of said remote source of radiation in such a manner that the temperature of said catalytic material (8) remains substantially at the preset temperature during the measurement of neutral hydrogen, oxygen or nitrogen atoms in said non-equilibrium gaseous medium;
   - Determining said power of said remote source employed to keep the preset temperature of said catalytic material (8);
   - Transforming said power of said remote source employed to keep the preset temperature of said catalytic material (8) to the density of said neutral atoms in said non-equilibrium gaseous medium;
   - Storing and/or displaying of said density of neutral atoms in said non-equilibrium gaseous medium.

2. The method of claim 1, wherein an infrared laser (1) is used as said remote source of radiation.

3. The method of claim 1 or 2, wherein said catalytic material (8) is selected from any material having a recombination coefficient with said neutral atoms equal or more than 0.01 at said preset temperature.

4. The method of any one of the preceding claims, wherein said preset temperature is at least 400 K above the ambient temperature.

**5.** The method of any one of the preceding claims, wherein several different catalytic materials are inserted into said non-equilibrium gaseous medium, each of said catalytic materials being sensitive to only one of said neutral hydrogen, oxygen and nitrogen atoms.

**6.** The method of any one of the preceding claims, wherein said non-equilibrium gaseous medium is gaseous plasma.

**7.** A device for detection and measurements of neutral hydrogen, oxygen or nitrogen atoms in a non-equilibrium gaseous medium, said device comprising

  - a catalytic material (8),
  - a remote source of radiation suitable for heating said catalytic material (8) to a preset temperature, wherein said remote source of radiation is a laser, the radiation of which being guided with an optical fiber (7) to the catalytic material (8),
  - a detector (9) for sensing of the catalytic material temperature,
  - an electronic system (2) for controlling said remote source of radiation,
  - an electronic system (10) for controlling said detector,
  - a processing unit (11) for controlling both said electronic systems, said processing unit (11) being designed for processing measured data from the detector (9) and controlling the electronic system (2) of said remote source of radiation for heating of said catalytic material (8) to the preset temperature and keeping said preset temperature during measurement of said neutral hydrogen, oxygen or nitrogen atoms in said non-equilibrium gaseous medium, and for determining and storing a power of said remote source of radiation necessary for keeping said preset temperature, and

  said processing unit (11) being designed for determining instant values of density of said hydrogen, oxygen or nitrogen atoms from the power of said remote source of radiation necessary for keeping said preset temperature.

**8.** The device of claim 7, wherein said processing unit is designed for displaying said instant values of density on a display (12).

**9.** The device of claim 7 or 8, wherein said remote source of radiation is an infrared laser (1).

**Patentansprüche**

**1.** Verfahren zur Detektion und Messung von neutralen Wasserstoff-, Sauerstoff- oder Stickstoffatomen in einem Nichtgleichgewichts-gasförmigen Medium, das Verfahren mindestens umfassend:

  - Einsatz mindestens eines katalytischen Materials (8) in das Nichtgleichgewichts-gasförmige Medium;
  - Erwärmen des katalytischen Materials (8) auf eine vorgegebene Temperatur, die mindestens 100 K über der Umgebungstemperatur liegt, unter Verwendung einer entfernten Strahlungsquelle, wobei die entfernte Strahlungsquelle ein Laser ist, dessen Strahlung mit einer Lichtleitfaser (7) zu dem katalytischen Material (8) geführt wird;
  - Erfassung der Temperatur des katalytischen Materials;
  - Steuerung der Leistung der entfernten derart, dass die Temperatur des katalytischen Materials (8) während der Messung von neutralen Wasserstoff-, Sauerstoff- oder Stickstoffatomen in dem Nichtgleichgewichts-gasförmigen Medium im Wesentlichen auf der voreingestellten Temperatur bleibt;
  - Bestimmung der Leistung der entfernten Quelle, die verwendet wird, um die voreingestellte Temperatur des katalytischen Materials (8) zu halten;
  - Transformieren der Leistung der entfernten Quelle, die verwendet wird, um die voreingestellte Temperatur des katalytischen Materials (8) auf die Dichte der neutralen Atome in dem Nichtgleichgewichts-gasförmigen Medium zu halten;
  - Speichern und/oder Anzeigen der Dichte von neutralen Atomen in dem Nichtgleichgewichts-gasförmigen Medium.

**2.** Verfahren nach Anspruch 1, wobei ein Infrarotlaser (1) als die entfernte Strahlungsquelle verwendet wird.

**3.** Verfahren nach Anspruch 1 oder 2, wobei das katalytische Material (8) aus einem Material mit einem Rekombinationskoeffizienten ausgewählt ist, wobei die neutralen Atome bei der voreingestellten Temperatur gleich oder grösser als 0,01 sind.

**4.** Verfahren nach einem der vorhergehenden Ansprüche, wobei die voreingestellte Temperatur mindestens 400 K über der Umgebungstemperatur liegt.

**5.** Verfahren nach einem der vorhergehenden Ansprüche, wobei mehrere verschiedene katalytische Materialien in das Nichtgleichgewichts-gasförmige Medium eingeführt werden, wobei jedes der katalytischen Materialien für nur eines der neutralen Wasserstoff -, Sauerstoff- und Stickstoffatome empfindlich ist.

6. Verfahren nach einem der vorhergehenden Ansprüche, wobei das Nichtgleichgewichts-gasförmige Medium gasförmiges Plasma ist.

7. Vorrichtung zur Detektion und Messung von neutralen Wasserstoff -, Sauerstoff- oder Stickstoffatomen in einem Nichtgleichgewichts-gasförmigen Medium, die Vorrichtung umfassend:

   - ein katalytisches Material (8),
   - eine entfernte Strahlungsquelle, die geeignet ist, das katalytische Material (8) auf eine voreingestellte Temperatur zu erwärmen, wobei die entfernte Strahlungsquelle ein Laser ist, dessen Strahlung mit einer Lichtleitfaser (7) zu dem katalytischen Material (8) geführt wird,
   - ein Detektor (9) zur Erfassung der Katalysatortemperatur,
   - ein elektronisches System (2) zur Steuerung der entfernten Strahlungsquelle,
   - ein elektronisches System (10) zur Steuerung des Detektors,
   - eine Verarbeitungseinheit (11) zur Steuerung beider elektronischer Systeme, die zur Verarbeitung von Messdaten aus dem Detektor (9) ausgebildet ist und zur Steuerung des elektronischen Systems (2) der entfernten Strahlungsquelle zum Erwärmen des katalytischen Materials (8) auf die voreingestellte Temperatur und das Einhalten der voreingestellten Temperatur während der Messung der neutralen Wasserstoff-, Sauerstoff- oder Stickstoffatome in dem Nichtgleichgewichts-gasförmigen Medium, und zur Bestimmung und Speicherung einer Leistung der entfernten Strahlungsquelle, die erforderlich ist, um die voreingestellte Temperatur zu halten, und

   wobei die Verarbeitungseinheit (11) dazu ausgebildet ist, aus der Leistung der entfernten Strahlungsquelle, die zur Einhaltung der voreingestellten Temperatur notwendig ist, Sofortwerte der Dichte der Wasserstoff-, Sauerstoff- oder Stickstoffatome zu ermitteln

8. Vorrichtung nach Anspruch 7, wobei die Verarbeitungseinheit zum Anzeigen der Sofortwerte der Dichte auf einem Display (12) ausgelegt ist.

9. Vorrichtung nach Anspruch 7 oder 8, wobei die entfernte Strahlungsquelle ein Infrarotlaser (1) ist.

## Revendications

1. Procédé pour détecter et mesurer des atomes neutres d'hydrogène, d'oxygène ou d'azote dans un milieu gazeux hors équilibre, ledit procédé comprenant au moins :

   - insertion d'au moins un matériau catalytique (8) dans ledit milieu gazeux hors équilibre ;
   - chauffage dudit matériau catalytique (8) à une température prédéfinie qui est au moins 100 K au-dessus de la température ambiante à l'aide d'une source de rayonnement à distance, ladite source de rayonnement à distance étant un laser, dont le rayonnement est guidé par une fibre optique (7) vers le matériau catalytique (8) ;
   - détection de la température dudit matériau catalytique ;
   - contrôle de la puissance de ladite source de rayonnement à distance de telle manière que la température dudit matériau catalytique (8) reste sensiblement à la température prédéfinie pendant la mesure d'atomes neutres d'hydrogène, d'oxygène ou d'azote dans ledit milieu gazeux hors équilibre ;
   - détermination de ladite puissance de ladite source à distance utilisée pour maintenir la température prédéfinie dudit matériau catalytique (8) ;
   - transformation de ladite puissance de ladite source à distance utilisée pour maintenir la température prédéfinie dudit matériau catalytique (8) à la densité desdits atomes neutres dans ledit milieu gazeux hors équilibre ;
   - stockage et/ou affichage de ladite densité d'atomes neutres dans ledit milieu gazeux hors équilibre.

2. Procédé selon la revendication 1, dans lequel un laser infrarouge (1) est utilisé en tant que ladite source de rayonnement à distance.

3. Procédé selon la revendication 1 ou 2, dans lequel ledit matériau catalytique (8) est choisi parmi n'importe quel matériau ayant un coefficient de recombinaison avec lesdits atomes neutres égal ou supérieur à 0,01 à ladite température prédéfinie.

4. Procédé selon l'une quelconque des revendications précédentes, ladite température prédéfinie étant d'au moins 400 K au-dessus de la température ambiante.

5. Procédé selon l'une quelconque des revendications précédentes, dans lequel plusieurs matériaux catalytiques différents sont insérés dans ledit milieu gazeux hors équilibre, chacun desdits matériaux catalytiques étant sensible à un seul desdits atomes neutres d'hydrogène, d'oxygène et d'azote.

6. Procédé selon l'une quelconque des revendications précédentes, dans lequel ledit milieu gazeux hors équilibre est un plasma gazeux.

7. Dispositif de détection et de mesure d'atomes neutres d'hydrogène, d'oxygène ou d'azote dans un milieu gazeux hors équilibre, ledit dispositif comprenant

> - un matériau catalytique (8),
> - une source de rayonnement à distance appropriée pour chauffer ledit matériau catalytique (8) à une température prédéfinie, ladite source de rayonnement à distance étant un laser, dont le rayonnement est guidé par une fibre optique (7) dans le matériau catalytique (8),
> - un détecteur (9) pour détecter de la température du matériau catalytique,
> - un système électronique (2) de commande de ladite source de rayonnement à distance,
> - un système électronique (10) de commande dudit détecteur,
> - une unité de traitement (11) pour commander lesdits systèmes électroniques, ladite unité de traitement (11) étant conçue pour traiter les données mesurées à partir du détecteur (9) et commander le système électronique (2) de ladite source de rayonnement à distance pour chauffer ledit matériau catalytique (8) à la température prédéfinie et maintenir ladite température prédéfinie pendant la mesure desdits atomes neutres d'hydrogène, d'oxygène ou d'azote dans ledit milieu gazeux hors équilibre, et pour déterminer et stocker la puissance de ladite source de rayonnement à distance nécessaire pour maintenir ladite température prédéfinie, et

ladite unité de traitement (11) étant conçue pour déterminer les valeurs instantanées de densité dédits atomes d'hydrogène, d'oxygène ou d'azote à partir de la puissance de ladite source de rayonnement à distance nécessaire pour maintenir ladite température prédéfinie.

8. Dispositif selon la revendication 7, dans lequel ladite unité de traitement est conçue pour afficher lesdites valeurs instantanées de densité sur un dispositif d'affichage (12).

9. Dispositif selon la revendication 7 ou 8, dans lequel ladite source de rayonnement à distance est un laser infrarouge (1).

Fig. 1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012093364 B
- JP 2008241283 B
- CN 103165378
- CN 101949852
- WO 2009154037 A
- JP 2008032606 B

**Non-patent literature cited in the description**

- **M. MOZETIC.** Extremely non-equilibrium oxygen plasma for direct synthesis of metal oxide nanowires on metallic substrates. *JOURNAL OF PHYSICS D: APPLIED PHYSICS,* 2011, vol. 44 (17), 174028